# EUROPEAN PATENT APPLICATION

(11) **EP 1 065 419 A1**
(43) Date of publication of application: **03.01.2001**
(21) Application number: 00305378.2
(22) Date of filing: 26.06.2000
(51) Int. Cl.: F16K 31/24, F15B 15/02

(54) **Switching valve**

(30) Priority: 30.06.1999 GB 9915309
(71) Applicant: Lucas Industries Limited, West Midlands B90 4LA (GB)
(72) Inventor: Dixon, Glyn Edward, Cheltenham, Gloucestershire, GL51 5RD (GB)
(74) Representative: Pople, Joanne Selina

(57) **Abstract**

A switching valve, for example as shown in Figure 1, comprises a valve member (13) slidable within a bore (12), a piston (18) moveable under the influence of the fluid pressure within a control chamber (19) and the fluid pressure within a pressure chamber (22), and a coupling arrangement whereby the valve member (13) is coupled to the piston (18), the coupling arrangement permitting a limited amount of relative movement to occur between the piston (18) and the valve member (13).

## Description

This invention relates to a switching valve for use in controlling the operation of a fluid pressure actuable device or for use in controlling the flow of a fluid along a passage.

It is known to use a plurality of bistable switching valves with a multiplexing control valve, the multiplexing control valve being used to apply fluid at either low or high pressure to a control fluid port and control chamber of a selected one of the switching valves to move that valve to a desired one of its stable positions, either open or closed. Each switching valve is designed such that, once moved to the selected position, it remains in its selected position until fluid is applied to the control fluid port and control chamber by the multiplexing valve to move the valve to its alternative stable position. In order to hold the valve in its stable positions, the valve is supplied with fluid at both high and low pressure, through appropriate ports, the valve being designed in such a manner that, when moved to one of its stable positions, fluid at high pressure is supplied to the control chamber of the valve, holding the valve in the selected position when the multiplexing valve is moved to service another of the switching valves, subsequent movement of the valve to its alternative position under the control of the multiplexing valve resulting in fluid under low pressure being supplied to the control chamber, thereby holding the valve in the selected position.

Such switching valves have the disadvantages that they are relatively complex and that they require the provision of both high and low pressure fluid connections thereto in order to hold the valves in their desired positions. It is an object of the invention to provide a switching valve in which these disadvantages are overcome.

According to the present invention there is provided a switching valve comprising a valve member slidable within a bore, a piston moveable under the influence of the fluid pressure within a control chamber and the fluid pressure within a pressure chamber, and a coupling arrangement whereby the valve member is coupled to the piston, the coupling arrangement permitting a limited amount of relative movement to occur between the piston and the valve member.

The pressure chamber conveniently communicates, in use, with a source of fluid under high pressure. A resilient biasing means, conveniently in the form of a compression spring, is preferably provided, the biasing means acting against the action of the fluid pressure within the pressure chamber.

In use, the control chamber is connected to a suitable control valve, for example in the form of a multiplexing valve. When fluid under high pressure is applied to the control chamber, the piston is urged towards a first axial position in which it holds the valve member in one of its stable conditions. In the event that the pressure within the control chamber falls, for example as a result of leakage when the multiplexing valve services another switching valve, then the piston may move away from the first position. Provided the control chamber is repressurised before the piston moves by a sufficient distance to cause movement of the valve member, the valve member remains in the said one of its stable positions. Movement of the valve member to its alternative stable position is achieved by relieving the fluid pressure within the control chamber causing movement of the piston to a second axial position, the movement being sufficient to cause movement of the valve member to its alternative position.

In order to hold the switching valve in one or other of its alternative positions, only fluid at high pressure is applied to the valve, no second, low pressure connection being required. The valve is therefore of relatively simple form.

Preferably, the valve member is movable within a first bore and the piston is movable within a further bore. As the valve member is coupled to the piston by means of the coupling arrangement, any axial misalignment between the first bore and the further bore can be compensated for. This provides a manufacturing advantage as the accuracy with which the first and further bores are drilled is less critical.

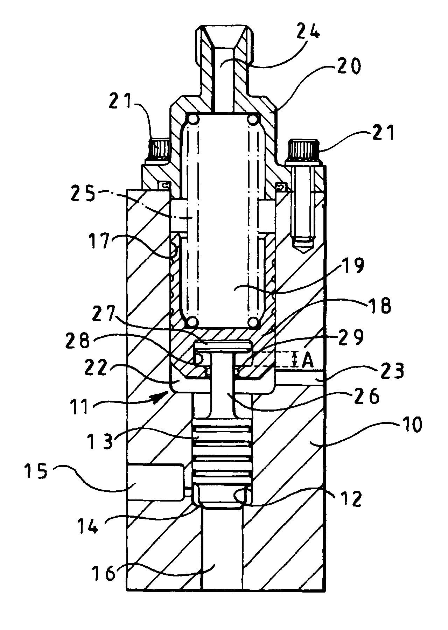

The invention will further be described, by way of example, with reference to the accompanying drawing, Figure 1, which is a sectional view illustrating a switching valve in accordance with an embodiment of the invention.

The switching valve illustrated in Figure 1 is intended for use with a multiplexing valve, for example of the type described in US 5570718. Briefly, such a multiplexing valve comprises a spool slidable within a bore under the control of an electro-hydraulic valve. The operation of the electro-hydraulic valve is such that the axial position of the spool within the bore can be controlled accurately. A position sensor, for example in the form of a LVDT may be provided to assist in controlling the movement and position of the spool. The spool is provided with a pair of feed passages, one of which is connected to a source of fluid under high pressure, the other being connected to a source of fluid under low pressure. A plurality of outlet passages are provided in the spool, a first group of the outlet passages communicating with one of the feed passages, the remaining outlet passages communicating with the other feed passage. The outlet passages are registrable, in turn, upon axial movement of the spool, with a series of outlet ports. It will be appreciated, therefore, that by appropriately controlling the position of the spool, fluid at either high or low pressure can be applied to a selected one of the outlet ports, the remaining outlet ports being closed by the spool.

The switching valve illustrated in Figure 1 comprises a valve body 10 provided with a bore 11 of stepped form. The bore 11 includes a relatively small diameter region 12 within which a valve member 13 is slidable. The valve member 13 is engageable with a seating 14 to control communication between an inlet 15 and an outlet 16 which is defined by part of the bore 11. The inlet 15 is connected, in use, to a source of fluid under pressure, and the outlet 16 is connected to a fluid pressure actuable device. It will be appreciated that, depending upon the position occupied by the valve member 13, i.e. whether or not it is in engagement with the seating 14, the fluid pressure applied to the device can be controlled. Alternatively, by controlling the duration over which the valve member 13 is lifted from the seating relative to that during which it engages its seating, the fluid flow rate along a passage within which the switching valve is located can be controlled.

The bore 11 further includes a relatively large diameter region 17 within which a piston 18 is slidable. The piston 18 divides the region 17 into a control chamber 19, closed by a cap 20 which is secured to the valve body 10 by bolts 21, appropriate seals being trapped between the valve body 10 and the cap 20, and a pressure chamber 22. The pressure chamber 22 communicates through a port 23 with a source of fluid under high pressure, in use. The cap 20 defines a control fluid port 24 which opens into the control chamber 19 and which is connected, in use, through an appropriate passage, with one of the outlet ports of the multiplexing valve. A spring 25 is located within the control chamber 19, the spring 25 being engaged between the cap 20 and the piston 18, urging the piston 18 in a downward direction in the orientation illustrated, applying a force to the piston opposing the force applied thereto by the fluid pressure within the pressure chamber 22.

The piston 18 and valve member 13 are coupled to one another through a coupling arrangement comprising a projection 26 extending from the valve member 13 towards the piston 18, the projection 26 carrying an integral outwardly extending flange 27. The flange 27 is located within a slot or groove 28 formed across the diameter of the piston 18. The flange 27 is held captive within the groove by means of shoulders 29, the presence of the shoulders 29 resulting in the groove 28 being of reentrant form. The groove 28 is of depth greater than the thickness of the flange 27 such that the flange is able to move, axially, within the groove 28 through a limited distance. As a result, a limited amount of relative movement is permitted between the piston 18 and the valve member 13. The distance through which the piston 18 can move relative to the valve member 13 is denoted by distance A in Figure 1.

In use, the port 24 is coupled to an outlet port of the multiplexing valve, and the port 23 is connected to a source of fluid under high pressure. A plurality of similar switching valves are connected to the other outlet ports of the multiplexing valve. In the position shown, fluid under relatively high pressure is being supplied through the multiplexing valve to the control chamber 19. As a result, the control chamber 19 is pressurised to a relatively high level. The force applied to the piston 18 due to the fluid pressure within the control chamber 19 balances that applied by the fluid pressure within the pressure chamber 22. As a result, the action of the spring 25 causes the piston 18 to occupy the position illustrated, this position being referred to herein as the first axial position of the piston 18. In this position, the engagement between the piston 18 and the flange 27 results in a force being applied to the valve member 13 urging the valve member 13 into engagement with its seating 14. Fluid is therefore not permitted to flow to the outlet 16. Additionally, fluid pressure in the chamber 22 acts on the valve member 13 to assist its closure.

In use, the spool of the multiplexing valve will not normally sit at a position in which fluid under pressure is applied to the control chamber of one of the switching valves for a significant duration, but rather will move to service another switching valve after a predetermined time has elapsed which is sufficient to cause movement of the switching valve to its desired position. The movement of the multiplexing valve to service another of the switching valves will result in the communication between the high pressure fluid source and the control chamber 19 of the illustrated switching valve being broken. The high fluid pressure will be sealed within the control chamber 19 but may fall gradually as a result of leakage, for example due to the spool of the multiplexing valve not forming a perfect seal to close the associated outlet port. As the pressure chamber 22 is in constant communication with the source of fluid under high pressure, a point may be reached beyond which the piston 18 is able to move away from the first position under the action of the fluid pressure within the pressure chamber 22 against the reduced pressure within the control chamber 19 and the spring 25. Provided the movement of the piston 18 is by a distance not greater than distance A, then the fluid pressure acting upon the valve member 13 within the pressure chamber 22 will hold the valve member 13 in the closed position illustrated.

The multiplexing valve is controlled such that, provided the switching valve is to be held in its closed position, then at regular intervals, the multiplexing valve is moved to a position in which the fluid pressure within the control chamber 19 is restored to the high level, returning the piston 18 to its first axial position as illustrated. The intervals between the points in the operating cycle at which the pressure within the control chamber 19 is being restored are sufficiently long to allow servicing of others of the switching valves, but sufficiently short to ensure that the pressure within the control chamber 19 does not fall to a level low enough to allow the piston 18 to move beyond the distance A, thus ensuring that the valve member 13 remains seated.

In the event that the valve member 13 is to be moved to its open position, then the spool of the multiplexing valve is moved to a position in which the control chamber 19 is connected to the source of fluid under low pressure. As a result, the magnitude of the force urging the piston 18 towards the first position is reduced and the piston will move to a second axial position under the action of the fluid pressure within the pressure chamber 22. The distance through which the piston 18 is moved to reach the second position is greater than distance A and, as a result, the flange 27 is engaged by the shoulders 29, the movement of the piston 18 beyond the distance A being transmitted to the valve member 13 lifting the valve member 13 away from the seating 14, thus permitting fluid flow to the outlet 16.

As, when the valve member 13 is lifted from the seating 14, the fluid pressure within the control chamber 19 is low, fluid leakage from the control chamber 19 is not a problem, thus there is no need to regularly service the switching valve to restore the fluid pressure within the control chamber 19 to the low level.

If desired, a restriction to fluid flow may be provided at the port 24 or in the passage between the port 24 and the outlet port of the multiplexing valve to limit the rate at which fluid can flow from the control chamber 19. The restriction may be of the "one way" type, restricting the rate at which fluid can flow from the control chamber but having substantially no effect upon the rate at which fluid can flow to the control chamber. The presence of such a restriction may have the effect of increasing the intervals at which the switching valve requires servicing by the multiplexing valve to hold the valve member in its closed position, but may also have the effect of reducing the rate at which movement of the valve member 13 away from its seating occurs. Depending upon the application in which the switching valve is used, these effects may be desirable.

Although, in the embodiment described hereinbefore, the valve member engages its seating when the piston occupies its first position and is spaced from its seating when the piston occupies its second position, the operation of the valve may be reversed, if desired.

It will be appreciated that the switching valve is advantageous in that it is of relatively simple construction, requiring the presence of only a single high pressure fluid connection for control purposes rather than both a high pressure connection and a low pressure connection as in the known arrangements. The present invention also provides a manufacturing advantage as any axial misalignment between the bore 17 within which the piston 18 moves and the bore 16 within which the valve member 13 moves can be compensated for by the coupling of the piston 18 to the valve member 13.

Although the switching valve is described hereinbefore as being used with a particular type of multiplexing valve, it will be appreciated that the switching valve may be used with other types of multiplexing valve or in systems in which the control pressure applied to the switching valve is controlled using any other suitable means.

## Claims

1. A switching valve comprising a valve member (13) slidable within a bore (12), a piston (18) moveable under the influence of the fluid pressure within a control chamber (19) and the fluid pressure within a pressure chamber (22), and a coupling arrangement (27, 29) whereby the valve member (13) is coupled to the piston (18), the coupling arrangement permitting a limited amount of relative movement to occur between the piston (18) and the valve member (13).

2. A switching valve as claimed in Claim 1, further comprising resilient biasing means (25) acting against the action of the fluid pressure within the pressure chamber (22).

3. A switching valve as claimed in Claim 2, wherein the biasing means comprises a compression spring (25) located within the control chamber (19).

4. A switching valve as claimed in any one of the preceding claims, further comprising a restriction restricting the rate at which fluid can flow from the control chamber (19).

5. A valve as claimed in Claim 4, wherein the restriction is a one way restriction, restricting the rate at which fluid can flow from the control chamber (19) but having substantially no effect upon the rate at which fluid can flow to the control chamber (19).

6. A switching valve as claimed in any one of the preceding claims, wherein the coupling arrangement comprises a flange (27) associated with the valve member (13) which is located within a groove (28) provided in the piston (18).

7. A switching valve as claimed in Claim 6, wherein the groove is a reentrant groove (28).

8. A switching valve as claimed in any of the preceding claims, wherein the valve member (13) is movable within a first bore (16) and the piston (18) is movable within a further bore (17), the coupling of the valve member (13) to the piston (18) compensating for any axial misalignment between the first bore (16) and the further bore (17).
